# EUROPÄISCHE PATENTSCHRIFT

(11) **EP 2 742 805 B1**
(45) Veröffentlichungstag und Bekanntmachung des Hinweises auf die Patenterteilung: **13.09.2017**
(21) Anmeldenummer: 12197462.0
(22) Anmeldetag: 17.12.2012
(51) Int. Cl.: A22C 11/10, A22C 11/00

(54) **Verfahren und Vorrichtung zum Abteilen eines von einer Füllmaschine erzeugten Wurststrangs**
Method and device for separating a sausage strand produced by a filling machine
Procédé et dispositif de séparation d'un chapelet de saucisses créé par une machine de remplissage

(43) Veröffentlichungstag der Anmeldung: 18.06.2014
(73) Patentinhaber: Albert Handtmann Maschinenfabrik GmbH & Co. KG, 88400 Biberach (DE)
(72) Erfinder: Bächtle, Manfred, 88433 Schemmerhofen (DE)
(74) Vertreter: Grünecker Patent- und Rechtsanwälte PartG mbB

(56) Entgegenhaltungen:
- EP-A1- 2 213 177
- EP-A1- 2 316 272
- EP-A1- 2 489 274
- US-A- 4 112 546

## Beschreibung

Die Erfindung betrifft ein Verfahren und eine Vorrichtung zum Abteilen eines von einer Füllmaschine erzeugten Wurststrangs.

Die EP 2 489 274 A1 beschreibt bereits, dass sich Abteilelemente radial zur Mittelachse der Wurst bewegen können. Auch eine Bewegung eines Abteilelements in Transportrichtung ist beschrieben. Ein anderes Abteilelement kann sich ebenfalls entlang der Mittelachse bewegen aber in die zur Transportrichtung entgegengesetzte Richtung, um einen Wurstzopf zu erzeugen. Diese Druckschrift zeigt nicht einen Mitfahrschritt, bei dem die Abteilelemente jeweils in Transportrichtung T mit bewegt werden, da im Gegensatz dazu in dieser Druckschrift nur ein Abteilelement mit bewegt wird und das andere sich in die entgegengesetzte Richtung bewegt. Auch kann die Länge des Mitfahrschritts nicht eingestellt werden, da in dieser Druckschrift nicht beide Abteilelemente mitfahren.
Aus der EP 0 392 083 ist bereits eine Vorrichtung bekannt, bei der sich zwei gegenüberliegende Verdrängerelemente auf festen Achsen synchron drehen. Durch die variablen Umfangsgeschwindigkeiten der Verdrängerelemente sind Produkte mit unterschiedlichen Längen herstellbar. Nach dem Einschnüren des Füllgutstrangs öffnen sich die Verdrängerelemente sofort wieder. Der Einschnür- und Ausschnürradius ist fest vorgegeben. Es hat sich herausgestellt, dass es vor allem bei der Produktion von Würsten im Naturdarm beim Abteilen zu Darmplatzern kommen kann.
In der EP 1 902 622 ist eine Vorrichtung beschrieben, mit der mittels einer variablen Abteilkette unterschiedliche Produktlängen hergestellt werden können. Auch bei dieser Vorrichtung kann es zu Problemen bei empfindlichen Naturdärmen kommen. Bei Kaliberwechsel oder Änderung der Wurstlänge sind mechanische Umbaumaßnahmen nötig.
In der EP 1 434 490 ist eine Vorrichtung beschrieben, bei der sich jeder Punkt eines Verdrängerelements während des Abteilens mit gleicher Geschwindigkeit bewegt. Die Verdränger bewegen sich auf einer festen Bahn. Auch hier öffnen sich die Verdrängerelemente sofort wieder nach dem Einschnüren des Füllgutstrangs und auch hier sind bei Kaliberwechsel oder Änderung der Wurstlänge mechanische Umbaumaßnahmen nötig. Darüber hinaus ergeben sich auch hier Probleme bei Naturdärmen.

Die bekannten Abteilvorrichtungen und -verfahren ermöglichen bislang keinen optimalen Abteilvorgang für unterschiedliche Wurstprodukte. Somit kann es immer wieder zu Wurstplatzern oder unförmigen Abteilstellen kommen. Bei Umstellung auf ein unterschiedliches Wurstkaliber bzw. eine unterschiedliche Wurstlänge, müssen die Anlagen mechanisch umgerüstet werden, was zeit- und kostenintensiv ist.

Hiervon ausgehend liegt der vorliegenden Erfindung die Aufgabe zugrunde, ein Verfahren und eine Vorrichtung zum schonenden Abteilen eines von einer Füllmaschine erzeugten Wurststrangs bereitzustellen, die den Abteilvorgang ohne Umrüsten in flexibler Art und Weise an unterschiedliche Wurstprodukte anpassen können.

Erfindungsgemäß wird diese Aufgabe durch die Merkmale der Ansprüche 1 und 7 gelöst.

Gemäß der vorliegenden Erfindung ist es nun möglich, die Bewegung der Abteilelemente jeweils entlang einer frei einstellbaren Bahn zu steuern. Das bedeutet, dass nun nicht, wie im Stand der Technik, die Abteilelemente auf einer fest voreingestellten Bahn bewegt werden, sondern die Bewegungsbahn der Abteilelemente in Abhängigkeit bestimmter Parameter auf bestimmte Wurstprodukte eingestellt werden kann.
Frei einstellbare Bahn bedeutet hier, dass ein Bewegungsmechanismus bzw. ein entsprechender Antrieb des Bewegungsmechanismus so von einer Steuerung angesteuert werden kann, dass eine gewünschte Bahn erzielt wird, ohne dass ein mechanisches Umrüsten notwendig ist. Somit entfällt gemäß der vorliegenden Erfindung ein aufwendiges Umrüsten der Abteileinrichtung bei unterschiedlichen Wurstkalibern oder unterschiedlichen Wursttypen. Die gesamte Bahn kann produkt- und darmabhängig eingestellt werden. Beispielsweise können empfindliche Därme anders behandelt werden als unempfindliche. Es entstehen insgesamt weniger Darmplatzer. Der Verfahrweg in eine Richtung quer zur Transportrichtung bei kleinen Kalibern ist anders als bei großen Kalibern. Insgesamt ergibt sich eine hohe Portionierleistung, da Kaliber- und Längen-abhängig optimiert gefahren werden kann.
Es ist ganz besonders vorteilhaft, wenn die Bahnkoordinaten (X, Y Koordinaten der zweidimensionalen Bahn) sowie die Geschwindigkeit der jeweiligen Abteilelemente auf verschiedenen Bahnabschnitten in Abhängigkeit folgender Parameter eingestellt werden:
Länge der Wurstportion, Kaliber der Wurstportion, sowie Wursthüllensorte.

Zusätzlich können die Bahnkoordinaten und die Geschwindigkeit der jeweiligen Abteilelemente auch in Abhängigkeit der Transportgeschwindigkeit des Transportierten Wurststrangs eingestellt werden. Mit einem solchen Verfahren ist es möglich, die Bewegung der jeweiligen Abteilelemente an die Länge und das Kaliber der Wurstportion anzupassen. Auch kann beispielsweise in Abhängigkeit der Wursthüllensorte ein langsames und schonendes Einschnüren oder aber ein schnelles Einschnüren erfolgen und zwar unabhängig von der Transportgeschwindigkeit des transportierten Wurststrangs oder der Geschwindigkeitskomponente der Abteilelementbewegung in Transportrichtung. Auch die Tiefe, d.h. wie weit die Abteilelemente in eine Richtung zur Mittelachse des Wurststrangs bewegt werden, kann eingestellt werden. Durch die flexible Bewegung quer zur Wurst sind daher unterschiedliche Restquerschnitte, d.h. Eintauchtiefen, einstellbar.
Es ist vorteilhaft, dass eine Bewegung des jeweiligen Abteilelements in eine Richtung senkrecht zur Transportrichtung unabhängig von einer Bewegung in eine Richtung in Transportrichtung gesteuert wird und insbesondere, dass die Geschwindigkeit der jeweiligen Abteilelemente in einer Richtung senkrecht zur Transportrichtung T unabhängig von der Geschwindigkeit der Abteilelemente in Transportrichtung gesteuert wird.

Somit können die Abteilelemente gezielt in bestimmte Positionen gebracht werden. Dabei versteht man unter Geschwindigkeit in Transportrichtung bzw. senkrecht in Transportrichtung auch Geschwindigkeitskomponenten, wenn die Bewegung in Transportrichtung bzw. senkrecht zur Transportrichtung überlagert sind.

Es ist besonders vorteilhaft, wenn die Abteilelemente jeweils auf ihrer Bahn, während sie den Wurststrang berühren oder in den Wurststrang eingreifen, eine vorbestimmte Strecke s auf einem Bahnabschnitt bewegt werden, der parallel zur Mittelachse M des Wurststrangs verläuft und die vorbestimmte Strecke insbesondere in einem Bereich von 0 bis 100 mm liegt.

Anders als beim Stand der Technik ermöglicht die vorliegende Erfindung nun, dass die Abteilelemente parallel zum Wurststrang mit dem Wurststrang mitfahren, wobei die Länge dieser Strecke frei einstellbar ist. Im Stand der Technik gab es ausschließlich Bewegungen, wobei Bewegungskomponenten in Transportrichtung und senkrecht zur Transportrichtung überlagert waren. Ein entsprechendes Mitfahren bringt den Vorteil mit sich, dass insbesondere empfindliche Wursthüllen, wie Naturdärme, länger geführt werden können. Es ist auch möglich, dass die Abteilelemente nach dem Verdrängen so weit aus dem Wurststrang herausgefahren werden, dass sie nur noch Führungsaufgaben übernehmen können. Diese Führungsaufgaben können auch derart gestaltet sein, dass z.B. bei langen Portionen die Verdrängerelemente vor dem Abteilen nur bis zum Wurstkaliber oder geringfügig größer, d.h. der Außenseite des gefüllten Wurststrangs, geschlossen werden und damit die Wurstportion beim Mitfahren nur zentrisch getragen wird. Gemäß der vorliegenden Erfindung können somit die Abteilelemente weitere Funktionen, insbesondere eine Führungsfunktion einnehmen.

Dadurch, dass die Abteilelemente bei unterschiedlichen Kalibern unterschiedlich weit in den Wurststrang hineinbewegt werden können, ist nur eine Größe von Verdrängerelementen für alle Kaliber notwendig. Das bedeutet, dass kein Umrüsten bei unterschiedlichen Kalibern notwendig ist.

Gemäß der vorliegenden Erfindung ist ebenfalls vorteilhaft, dass der Eintauchweg der Abteilelemente eingestellt werden kann und zwar von der Wurstführung bis zum überlappenden Eintauchen der Abteilelemente, d.h. bis zum Durchtrennen der Portionen. Das bedeutet, dass sowohl zum Einschnüren, d.h. wenn die Wurstportionen noch miteinander verbunden sind, als auch zum vollständigen Durchtrennen die gleichen Abteilelemente für verschiedene Kaliber verwendet werden können.

Es ist ganz besonders vorteilhaft, wenn die Geschwindigkeit des jeweiligen Abteilelements in einer Richtung senkrecht zur Transportrichtung des Wurststrangs, wenn sich das jeweilige Abteilelement von der Außenkontur des Wurststrangs in den Wurststrang hinein bewegt, sich von der Geschwindigkeit entgegen dieser Richtung senkrecht zur Transportrichtung des Wurststrangs, wenn sich das jeweilige Abteilelement aus dem Wurststrang herausbewegt, unterscheidet. So ist es beispielsweise möglich, dass sich die Abteilelemente beim Einschnüren sehr langsam in die Transportrichtung bewegen, während sie sich sehr schnell aus dem Wurststrang herausbewegen können. Das ermöglicht den Vorteil, dass schonend abgeteilt wird und sich die Abteilelemente über eine lange Strecke zusammen mit der Wurstportion mitbewegen können, so dass die Wurst lange durch die Abteilelemente geführt werden kann und somit die Strecke, in der die Wurst bis zur nächsten Transporteinrichtung (beispielsweise bis zu nachfolgenden Transportbändern) nicht geführt ist, möglichst klein gehalten werden kann.

Bei dem erfindungsgemäßen Verfahren durchlaufen die Abteilelemente auf ihrer Bahn zumindest folgende Schritte:
a) Einschnürschritt, bei dem die Abteilelemente von einem Startpunkt aus aufeinander zu bewegt werden,
b) Mitfahrschritt, bei dem die Abteilelemente jeweils in Transportrichtung mitbewegt werden,
c) Auskoppelschritt, bei dem die Abteilelemente jeweils aus dem Wurststrang herausbewegt werden und
d) Rückführschritt, in dem die Abteilelemente zum Startpunkt zurückgeführt werden.

Gemäß der vorliegenden Erfindung kann hier die Länge des Mitfahrschritts frei eingestellt werden. Bei dem erfindungsgemäßen Verfahren können auch die Schritte a), b) bzw. b) und c) überlagert sein, d.h., dass während das Abteilelement sich in einer Richtung senkrecht zur Transportrichtung bewegt, es gleichzeitig in Transportrichtung mitbewegt wird und während es ausgekoppelt wird, sich ebenfalls noch mit in Transportrichtung bewegt. Es ist auch möglich, dass Schritt c) und d) überlagert sind, wenn die Wurst oder Wurstkuppe dabei nicht berührt wird. Ein solches Verfahren, bei dem Länge und Geschwindigkeit des Schritts b) frei einstellbar sind, ermöglicht ein besonders schonendes Abteilen.

Die erfindungsgemäße Vorrichtung weist zwei Abteilelemente auf, die auf gegenüberliegenden Seiten des in Transportrichtung geförderten Wurststrangs liegen. Die Bahn, auf der die Abteilelemente bewegt werden, ist frei einstellbar. Dabei umfasst die Vorrichtung zwei unabhängig voneinander ansteuerbare Antriebe pro Abteilelement, d.h. pro Seite. Ferner ist ein Bewegungsmechanismus vorgesehen, der mit den beiden Antrieben und dem jeweiligen Abteilelement verbunden ist, wobei der Bewegungsmechanismus derart ausgebildet ist, dass die jeweiligen Abteilelemente entlang der frei einstellbaren Bahn bewegbar sind.

Gemäß einer bevorzugten Ausführungsform umfasst der jeweilige Bewegungsmechanismus zwei Antriebsglieder, die jeweils mit einem der beiden Antriebe verbunden sind sowie zwei Kopplungsglieder, die gelenkig mit den Antriebgliedern verbunden sind, wobei auch die Kopplungsglieder miteinander gelenkig verbunden sind und das entsprechende Abteilelement an mindestens einem Kopplungsglied angeordnet ist. Ein solcher Mechanismus erlaubt über die Bewegungsrichtung der Antriebe sowie den Drehwinkel der Antriebe jede beliebige Bewegung, d.h. in Transportrichtung, senkrecht zur Transportrichtung und auch überlagerte Bewegungen.

Es ist ganz besonders vorteilhaft, wenn der Bewegungsmechanismus eine Parallelogrammführung umfasst, derart, dass das jeweilige Abteilelement bei der Bewegung auf der Bahn eine gleichbleibende Ausrichtung zum Wurststrang beibehält. Insbesondere soll das am Kopplungsglied befestigte Abteilelement bei Bewegung entlang einer Bahn des Kopplungsgliedes eine gleichbleibende Ausrichtung zum Wurststrang beibehalten. Somit kann sichergestellt werden, dass die Abteilelemente, während sie mit dem Wurststrang in Kontakt sind, stets korrekt ausgerichtet bleiben.

Gemäß der vorliegenden Erfindung bewegen sich die Antriebe, (d.h. die Antriebswellen, die senkrecht zu einer Ebene, die die Bahn enthält, gerichtet sind, bei der Bewegung der Abteilelemente auf ihrer Bahn) hin und her. Das heißt, die Antriebe führen eine "schwingende" Hin- und Herbewegung aus und werden zu jedem Zeitpunkt angesteuert, abhängig vom Bahnverlauf. Das bedeutet, dass anders als bei bisherigen Antrieben, die Antriebe keine kontinuierliche Drehbewegung in einer Richtung durchführen sondern Hin- und Herdrehbewegungen in einem Winkelbereich < 360°, vorzugsweise in einem Bereich < 200°ausführen.

Die Vorrichtung umfasst eine Steuerung, die die Bahnkoordinaten (X, Y) in Winkelpositionen der Antriebe umrechnet. Dies ist mit einem entsprechenden Programm, bei bekannten Abmessungen des Bewegungsmechanismus, möglich.

Die gegenüberliegenden Abteilelemente weisen jeweils zwei Antriebe auf, wobei mindestens ein Antrieb eines Abteilelementes mit jeweils einem Antrieb des anderen Abteilelementes gekoppelt ist. Dies bringt den Vorteil mit sich, dass dann insgesamt nicht vier sondern nur zwei Servomotoren notwendig sind, da die im Hinblick auf den Wurststrang gegenüberliegenden Abteilelemente den gleichen Bewegungsablauf aufweisen. Der entsprechende andere Antrieb eines jeden Abteilelements kann dann wiederum mit dem zweiten Antrieb des gegenüberliegenden Abteilelementes gekoppelt sein.

Vorteilhafterweise umfasst eine Füllmaschine die erfindungsgemäße Vorrichtung und weist eine Eingabeeinrichtung auf, in der Länge und Kaliber der Wurstportion eingegeben werden kann und zusätzlich vorteilhafterweise auch die Wursthüllensorte, wie beispielsweise Naturdarm oder Kunstdarm oder aber z.B. unempfindlicher oder empfindlicher Darm. Die Bewegung der Abteilelemente kann dann entsprechend von der Steuerung gesteuert werden. Die entsprechenden Bahnen bzw. Abschnittgeschwindigkeiten wurden dabei vorab in der Steuerung abgelegt, wobei einzelne Parameter noch verändert werden können.

Es ist auch möglich, dass die Abteilelemente unabhängig voneinander antreibbar sind. Diese Ausführungsform ist insbesondere geeignet, wenn die Abteilelemente so weit aufeinander zu bewegt werden, dass ein sogenannter Wurstzopf verbleibt und die Verdrängerelemente derart ausgebildet sind, dass der Wurstzopf in der Aussparung gehalten wird und nicht herausrutscht. Dann kann bei dem Mitfahrschritt ein Verdrängerelement schneller laufen als das andere, nämlich das in Transportrichtung T vorlaufende Verdrängerelement. Somit kann diese Vorrichtung auch für eine Verwendung zusammen mit einer Clipmaschine genutzt werden, die einen Clip in den Wurstzopf zwischen den Verdrängerelementen setzt.

Die Erfindung wird nun unter Bezugnahme der folgenden Figuren näher erläutert:
- Fig. 1: zeigt grob schematisch eine Füllmaschine gemäß der vorliegenden Erfindung.
- Fig. 2: zeigt schematisch eine Aufsicht auf eine Vorrichtung zum Abteilen gemäß der vorliegenden Erfindung mit kurzem Mitfahrweg für kurze und lange Portionen in einer ersten Position.
- Fig. 3: zeigt die in Fig. 2 gezeigte Vorrichtung in einer zweiten Position.
- Fig. 4: zeigt die in Fig. 2 und 3 gezeigte Vorrichtung in einer dritten Position.
- Fig. 5: zeigt schematisch eine Aufsicht auf die Vorrichtung zum Abteilen mit langem Mitfahrweg für empfindliche Würste in einer ersten Position.
- Fig. 6: zeigt die in Fig. 5 gezeigte Vorrichtung in einer zweiten Position.
- Fig. 7: zeigt die in Fig. 5 und 6 gezeigte Vorrichtung in einer dritten Position.
- Fig. 8: zeigt die in Fig. 5 bis 7 gezeigte Vorrichtung in einer vierten Position.
- Fig. 9: zeigt eine grob schematische Seitenansicht von zwei gegenüberliegenden Verdrängerelementen gemäß der vorliegenden Erfindung.
- Fig. 10: zeigt eine grob schematische Seitenansicht von zwei gegenüberliegenden Verdrängerelementen gemäß einer weiteren Ausführungsform.

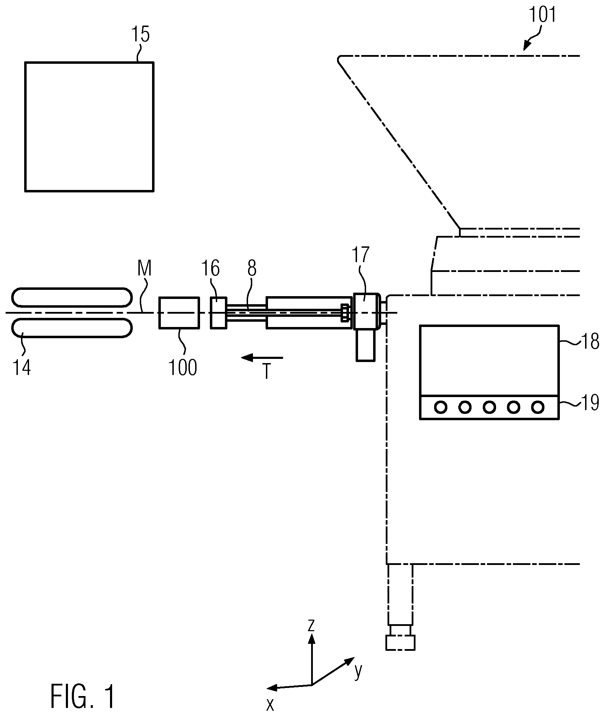

Fig. 1 zeigt grob schematisch eine Füllmaschine 101 zum Erzeugen von Wurstportionen. Dabei wird in bekannter Weise das Füllgut über einen Trichter zugeführt und über ein nicht dargestelltes Förderwerk in das Füllrohr 8 transportiert. Am Füllrohrende 8 befindet sich eine Darmbremse 16. Zum Abdrehen des gefüllten Wurststrangs ist optional eine Abdreheinheit 17, d.h. ein Abdrehgetriebe, vorgesehen, das über einen Motor angetrieben wird. Über das Abdrehgetriebe kann das Füllrohr 8 zusammen mit der darauf aufgezogenen Hülle um die Mittelachse M des Wurststrangs gedreht werden. Über das Füllrohr 8 wird die pastöse Masse in die auf dem Füllrohr 8 aufgezogene und durch die Darmbremse 16 gehaltene Hülle, z.B. Darm, ausgestoßen, wodurch der gefüllte Wurststrang 7 in bekannter Weise erzeugt wird. Alternativ zur Darmbremse kann auch eine Koextrusionsvorrichtung zum Herstellen eines gefüllten Wurststrangs vorgesehen sein.

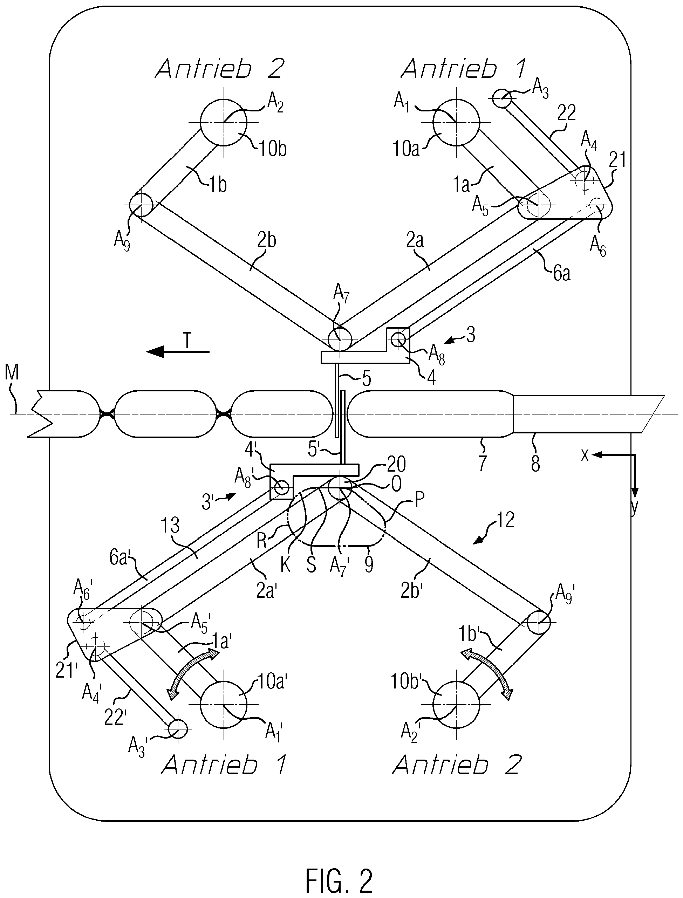

Unmittelbar hinter dem Füllrohr befindet sich die Vorrichtung 100 zum Abteilen des gefüllten Wurststrangs in Einzelportionen einer vorbestimmten Länge L. Diese Vorrichtung wird nachfolgend insbesondere im Zusammenhang mit den Fig. 2 bis 9 näher erläutert.

Im Anschluss an die Vorrichtung 100 kann eine weitere Transportvorrichtung 14, beispielsweise in Form von gegenüberliegenden Transportbändern, vorgesehen sein, die die Wurstportionen aufnimmt und in Transportrichtung T weiterbefördert. Die Vorrichtung 100 kann über eine Steuerung 15 angesteuert werden. Die Steuereinrichtung 15 kann dabei auch in der Füllmaschine 101 integriert sein, insbesondere in der Steuerung der Füllmaschine 101. Die Vorrichtung 100 oder aber die Füllmaschine 101 weist eine Anzeige 18 auf, in der unter anderem bestimmte einstellbare Parameter, wie z. B. die Produktionsleistung, Bahnverlauf etc. angezeigt werden. Weiter ist eine Eingabeeinrichtung 19 vorgesehen, über die bestimmte Funktionen oder Parameter eingegeben werden können. Insbesondere kann über die Eingabeeinrichtung 19 und die Anzeige 18 die Länge und das Kaliber der zu erzeugenden Wurstportion eingegeben werden. Außerdem kann eine Wursthüllensorte eingegeben werden, beispielsweise ob es sich um eine sehr empfindliche Wursthülle (z.B. Naturdarm, coextrudierter Darm) oder um eine unempfindliche Wursthülle (z.B. Kunstdarm) handelt. Entsprechend dieser eingegebenen Parameter kann dann die Steuerung 15 die Vorrichtung 100 ansteuern.

Fig. 2 zeigt eine Aufsicht auf eine Vorrichtung 100 gemäß einem Ausführungsbeispiel der vorliegenden Erfindung. Die Vorrichtung 100 zum Abteilen des Wurststrangs 7 ist in Transportrichtung so hinter dem Füllrohr 8 angeordnet, dass die in Bezug auf den Wurststrang 7 gegenüberliegenden Abteilelemente 3, 3' in den Wurststrang 7 eingreifen können, um diesen entweder einzuschnüren, d.h. Wurstportionen zu erzeugen, die noch miteinander verbunden sind oder aber den Wurststrang an bestimmten Stellen komplett zu durchtrennen, so dass Einzelwürste entstehen.

In der Vorrichtung 100 können die Abteilelemente 3, 3' entlang der in Fig. 2 gezeigten, frei einstellbaren Bahn geführt werden. Die Bewegung der Abteilelemente 3, 3' ist somit nicht auf eine einzige mechanisch vorbestimmte Bahn beschränkt. Die Bahn 9 ist der Einfachheit halber lediglich auf einer Seite der Vorrichtung 100 dargestellt, wobei das Abteilelement 3 eine entsprechende an der Mittelachse M gespiegelte Bahn 9 durchläuft. Auf jeder Seite der Vorrichtung, in Bezug auf den Wurststrang 7, sind zwei Antriebe 10a', 10b', 10a, 10b vorgesehen.

Die Funktionsweise der Antriebe und des Bewegungsmechanismus wird der Einfachheit halber unter Bezugnahme des in den Figuren gezeigten unteren Teils der Vorrichtung 100 erläutert, gilt aber entsprechend für den oberen Teil. Antrieb 1 und Antrieb 2 werden über entsprechende nicht dargestellte Motoren, insbesondere Servomotoren, unabhängig voneinander angetrieben. Die Motoren werden dabei unabhängig voneinander über eine Steuerung 15 angesteuert. Die Antriebe 10a', 10b' umfassen senkrecht zur in den Fig. 2 bis 8 dargestellten Bildebene verlaufende Antriebswellen (entlang der Z-Achse). Die Antriebe 10a', 10b' werden derart angesteuert, dass sie, wie durch die Pfeile dargestellt ist, eine Hin- und Herbewegung während des Abteilbetriebs durchführen. Die Hin- und Herbewegung der Antriebe 10a', 10b' bzw. der Antriebswellen, erfolgt in einem Winkelbereich < 360°, vorzugsweise < 200°. Mit den jeweiligen Antrieben ist ein Bewegungsmechanismus 12 verbunden. Der Bewegungsmechanismus 12 umfasst zwei Antriebsglieder 1a', 1b', die jeweils fest mit einem entsprechenden Antrieb 10a', 10b' verbunden sind. Wenn sich daher die Antriebe 10a', 10b' um die jeweiligen Achsen A1' sowie A2' drehen, werden die Antriebsglieder 1a', 1b' entsprechend mitbewegt. Mit den jeweiligen Antriebsgliedern 1a', 1b' sind entsprechende Kopplungsglieder 2a', 2b' gelenkig verbunden, d.h. dass sich die Kopplungsglieder 2a', 2b' um die jeweiligen Achsen A5' sowie A9' in der X-Y-Ebene bewegen können, wobei die X-Y-Ebene eine Ebene ist, die entweder die Mittelachse M des gefüllten Wurststrangs 7 enthält oder aber parallel zur Mittelachse M verläuft. Die beiden Kopplungsglieder 2a', 2b' sind wiederum miteinander um die Achse A7' drehbar gelenkig verbunden. Das Abteilelement 3' umfasst einen Verdrängerträger 4' sowie ein Verdrängerelement 5'. Das Abteilelement, insbesondere der Verdrängerträger 4', ist gemäß der vorliegenden Erfindung mit einem der Kopplungsglieder 2a', 2b' verbunden. Somit kann das Abteilelement 3' zusammen mit der Bewegung der Kopplungsglieder bewegt werden.

Ganz besonders vorteilhaft ist das Abteilelement 3' derart angeordnet, dass seine Ausrichtung in Bezug auf den Wurststrang 7 stets gleich bleibt, d.h. hier beispielsweise, dass die Verdrängerelemente 5 unter einem konstanten Winkel (hier 90°) zur Mittelachse M ausgerichtet sind. Dazu kann der Bewegungsmechanismus vorzugsweise eine Parallelogrammführung 13 aufweisen. Das Abteilelement, vorzugsweise der Verdrängerträger 4', weist dabei einen Abschnitt, hier z.B. Vorsprung 20 auf, in dem er ebenfalls drehbar um die Achse A7' gelagert ist und um diese Achse drehbar mit den Kopplungsgliedern 2a', 2b' verbunden ist. Schließlich weist die Parallelogrammführung die Parallelkurbel 6a' auf, die parallel zu einem der Kopplungsglieder 2a' angeordnet ist und ebenfalls gelenkig, d.h. um die Achse A8' drehbar, mit dem Abteilelement, hier dem Verdrängerträger 4', verbunden ist. Sowohl die Parallelkurbel 6a' als auch das Kopplungsglied 2a' sind ebenfalls drehbar über die Achsen A6' und A5' in dem Teil 21' gelagert. Eine Gerade, die durch die Achsen A6' und A5' verläuft, ist parallel zu einer Achse, die durch die Achsen A8' und A7' verläuft. Darüber hinaus ist die Parallelkurbel 22', die parallel zu dem Antriebsglied 1a' verläuft, drehbar um die Achse A3' gelagert. Dabei ist eine Gerade, die durch die Achsen A3' und A1' verläuft, parallel zu einer Geraden, die durch die Achsen A4' und A5' läuft. Die Parallelkurbel 22' ist ebenfalls um die Achse A4' drehbar bzw. gelenkig in dem Teil 21' befestigt. Somit kann das Abteilelement 3' bei der Bewegung auf der Bahn 9 eine gleichbleibende Ausrichtung zum Wurststrang 7 beibehalten. Das am Kopplungsglied 2a' angeordnete Abteilelemente 3' bewegt sich somit zusammen mit der durch die Antriebe 10a', 10b' hervorgerufene Bewegung der Kopplungsglieder 2a', 2b' mit und behält auf dieser Bewegungsbahn seine Ausrichtung.

Bei diesem Ausführungsbeispiel ist die Parallelogrammführung 13 an dem in Transportrichtung betrachteten zweiten Antriebs- und Kopplungsglied angeordnet. Es ist jedoch auch möglich, dass das in Transportrichtung T gezeigte erste Antriebs- und Kopplungsglied die Parallelogrammführung aufweisen.

Die gegenüberliegenden Abteilelemente 3, 3' weisen jeweils zwei Antriebe 10a', 10b' auf, wobei mindestens ein Antrieb auf einer Seite mit jeweils einem Antrieb auf der anderen Seite gekoppelt ist. Bei dem in Fig. 2 gezeigten Ausführungsbeispiel ist beispielsweise der Antrieb 10a' mit dem Antrieb 10a gekoppelt, das heißt, dass die Antriebe von einem gemeinsamen Servomotor angetrieben werden. Der Antrieb 10b ist mit dem Antrieb 10b' gekoppelt und wird ebenfalls über einen gemeinsamen Servomotor angetrieben. Es wäre jedoch auch möglich, dass die Antriebe nicht diagonal miteinander gekoppelt sind, sondern dass jene Antriebe gekoppelt sind, die gegenüberliegen, wobei jedoch die Bewegungsmechanismen dann so angeordnet wären, dass die Antriebe 10a und 10a' und die Antriebe 10b und 10b' jeweils direkt gegenüberliegen und nicht wie in den Figuren gezeigt diagonal.

Durch das gezielte Ansteuern der Antriebe kann das jeweilige Abteilelement 3, 3' entlang einer gewünschten Bahn 9 bewegt werden, wobei die X-Y-Position des Abteilelements 3, 3' von einem Programm, in der Steuerung 15, in die Winkelposition der Antriebe bzw. der dazugehörigen Servomotoren, umgerechnet wird. Das bedeutet, dass der erfindungsgemäße Bewegungsmechanismus ermöglicht, dass die Abteilelemente 3, 3' nicht auf einer einzigen vorgefertigten Bahn bewegt werden, sondern dass die Bewegung des jeweiligen Abteilelements 3, 3' in eine Richtung senkrecht zur Transportrichtung T, (d.h. in Y-Richtung), unabhängig von einer Bewegung in eine Richtung in Transportrichtung T (X-Richtung) gesteuert werden kann und insbesondere, dass die Geschwindigkeit der jeweiligen Abteilelemente 3, 3' in einer Richtung senkrecht zur Transportrichtung T (Y-Richtung) unabhängig von der Geschwindigkeit der Abteilelemente 3 in Transportrichtung T (X-Richtung) gesteuert werden kann.

Dabei können die Bahnkoordinaten x,y von der Bahn sowie die Geschwindigkeit der jeweiligen Abteilelemente 3, 3' auf verschiedenen Bahnabschnitten in Abhängigkeit von unterschiedlichen Parametern eingestellt werden, wie beispielsweise Länge der Wurstportion, Kaliber der Wurstportion, Transportgeschwindigkeit des transportierten Wurststrangs in Transportrichtung oder Wursthüllensorte.

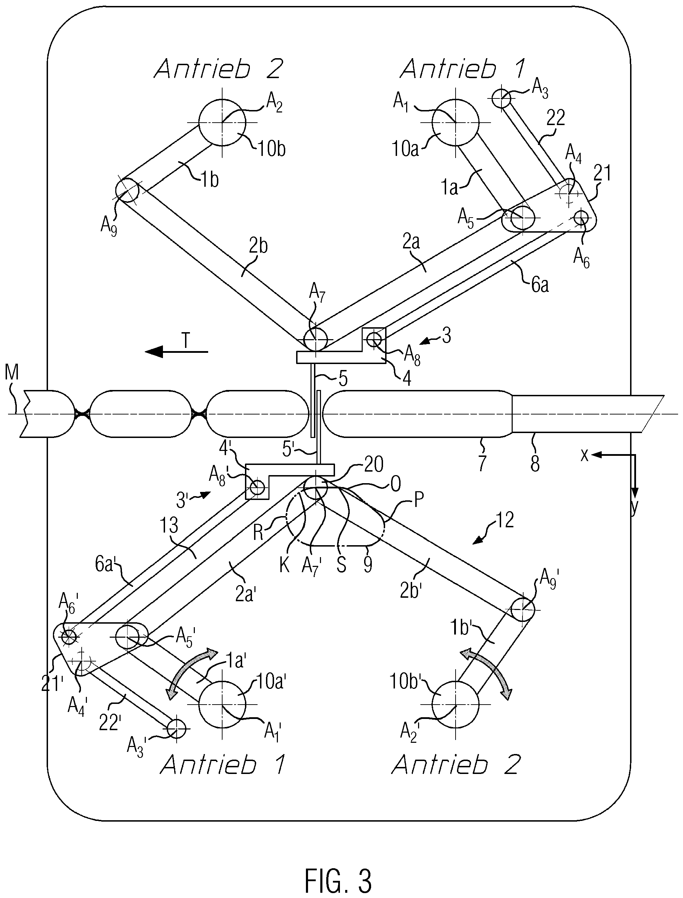

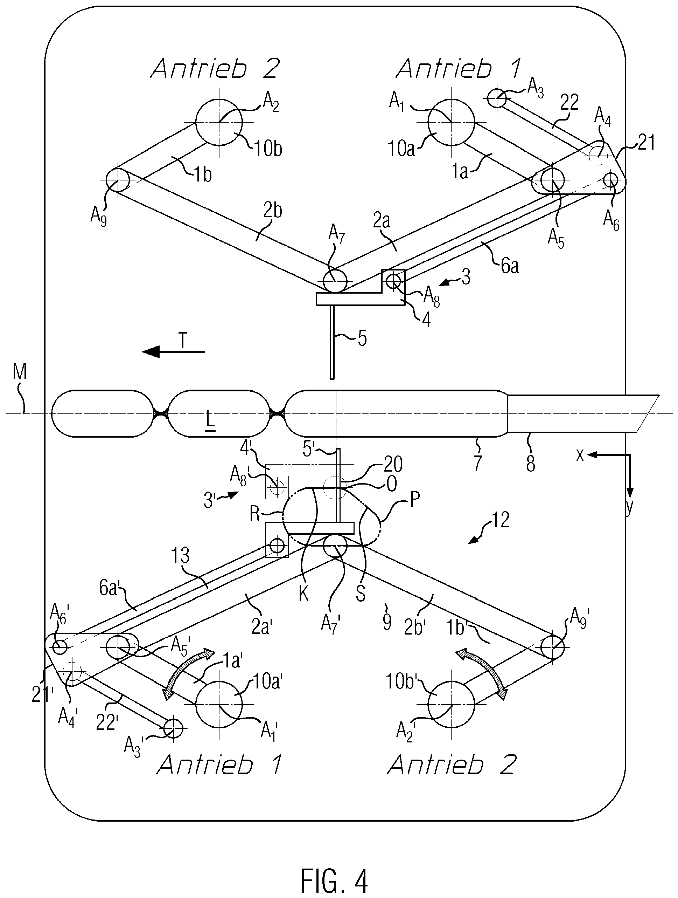

In Fig. 2 sind die Abteilelemente 3, 3' in einer Position O gezeigt, in der sie in den Wurststrang 7 eingreifen. Wie weit die Abteilelemente bzw. die Verdrängerelemente 5 der Abteilelemente in den Wurststrang in einer Richtung senkrecht zur Transportrichtung T bewegt werden, hängt vom Wurstkaliber (Wurstdurchmesser) sowie vom gewünschten Einschnürgrad ab. Die Verdrängerelemente 5 werden dabei vorzugsweise möglichst nah aneinander vorbeigeführt. Die Verdrängerelemente können auch so weit in den Wurststrang hineingebracht werden, dass der Wurstrang durchtrennt wird, um getrennte Einzelportionen zu erzeugen. Dann muss eine Einrichtung z.B. nachfolgende Transporteinrichtung, z.B. Bänder 14 in Fig.1 die Einzelwurst halten. Wie aus Fig. 2 und 3 hervorgeht, wird dann über eine entsprechende Ansteuerung der Antriebe 10a', b', 10a,b das Abteilelement auf einem Abschnitt s in einer Richtung geführt, die parallel zur Mittelachse M des Wurststrangs 7 verläuft. Dies bringt den Vorteil mit sich, dass der Wurstrang über diese Strecke s dann noch von den Verdrängerelementen 5 geführt und gehalten wird. Die Strecke s kann in einem Bereich von < 100 mm, vorzugsweise 5 bis 100 mm, liegen. An einem Punkt K werden die Abteilelemente 3, 3' bzw. die Verdrängerelemente 5, 5' wieder aus dem Wurstrang 7 herausbewegt, wobei hier eine Bewegung in Transportrichtung T mit einer Bewegung senkrecht zur Transportrichtung T überlagert wird. Die Abteilelemente 3, 3' bewegen sich dann vom Punkt R aus auf der geschlossenen Bahn zurück zu einem Punkt P, wie auch aus Fig. 4 hervorgeht. Vom Punkt P aus beginnen die Abteilelemente 3, 3' sich wieder aufeinander zu zu bewegen, wobei die Bahn sowie die Geschwindigkeiten derart ausgelegt sind, dass die Verdrängerelemente 5 genau dann wieder in den Wurststrang 7 eingreifen, wenn die erzeugte Wurstportion eine bestimmte Länge L erreicht hat.

Vorteilhafterweise ist die Bahn 9 derart ausgebildet, dass ihre Erstreckung in Transportrichtung größer ist als senkrecht zur Transportrichtung. Somit ist sichergestellt, dass sich zum Stützen der Wurstportionen das Abteilelement mitbewegen kann. Somit kann die Wurstportion, wie aus Fig. 1 hervorgeht, möglichst lange geführt werden, bis es der nächsten Transporteinrichtung 14 übergeben wird.

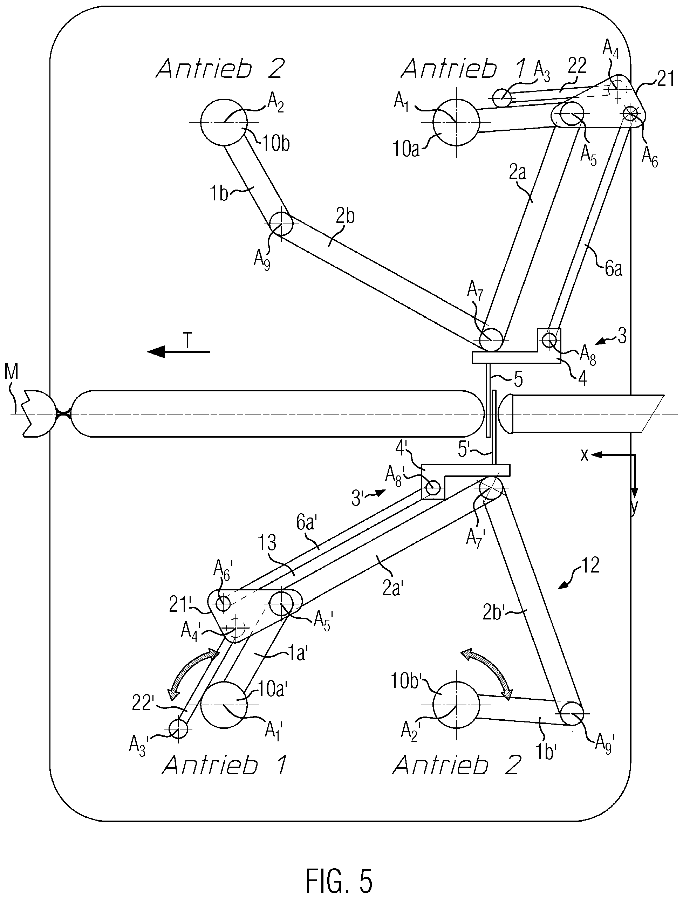

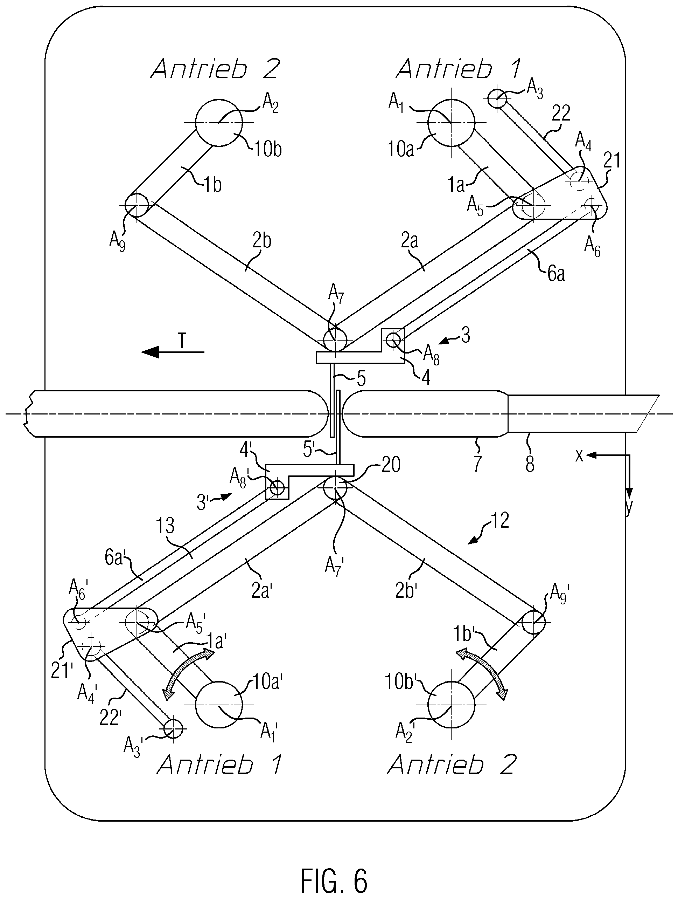

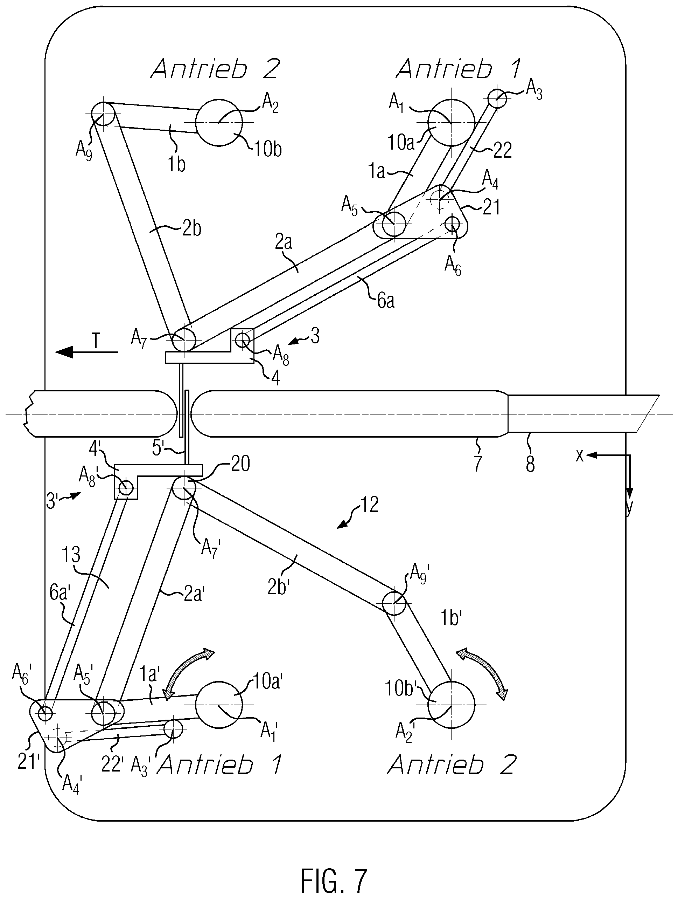

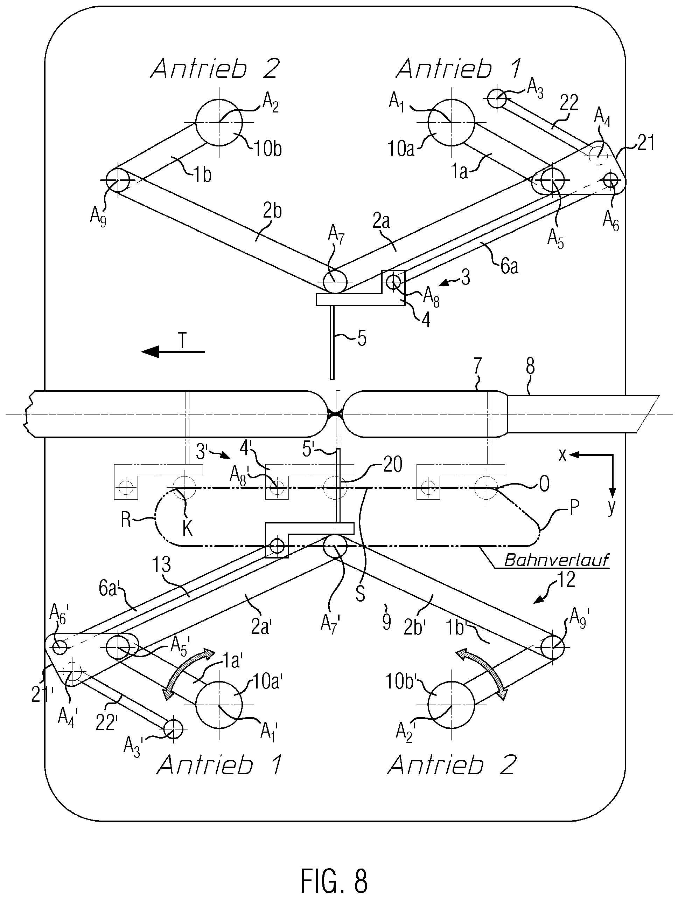

Im Zusammenhang mit den Fig. 2 bis 4 wurde die Bewegung auf einer Bahn 9 mit kurzem Mitfahrweg erläutert, wobei hier insbesondere kurze Wurstportionen hergestellt werden können, aber auch lange Portionen in stabiler Wursthülle. In Fig. 5 bis 8 ist die gleiche Vorrichtung gezeigt, die jedoch nun so betrieben wird, dass längere Wurstportionen hergestellt werden können, die einen längeren Mitfahrweg benötigen. D .h. dass sich die frei programmierbare Bahn 9, wie insbesondere aus Fig. 8 hervorgeht, von dem Bahnverlauf, wie er in den Fig. 2 bis 4 gezeigt wurde, unterscheidet. Insbesondere ist hier die Strecke in der die Abteilelemente in Transportrichtung bewegt werden (vom Punkt P zum Punkt R) und insbesondere auch die Strecke s, in der die Verdrängerelemente bzw. Abteilelemente 3, 3' parallel zur Mittelachse M in Transportrichtung T bewegt werden, länger als in dem vorherigen Ausführungsbeispiel, um die lange Wurstportion möglichst lange abzustützen und zu führen. Fig. 5 zeigt die ineinandergreifenden Verdrängerelemente 5, 5', die in den Wurstrang eingreifen. In Fig. 6 fahren die Verdrängerelemente zum Abstützen mit dem Wurststrang in Transportrichtung T mit bis zum Ende der Strecke s am Punkt K. Dort beginnen die Verdrängerelemente, wie in Fig. 7 angedeutet ist, sich wieder aus dem Wurststrang hinauszuziehen, wobei dann die Abteilelemente 3, 3' auf der Bahn wieder zurück zum Punkt P geführt werden. Bahn und Geschwindigkeit der Abteilelemente 3, 3' sind ebenso wie bei dem ersten Ausführungsbeispiel so abgestimmt, dass nach einer bestimmten Portionslänge L die Abteilelemente bzw. Verdrängerelemente 5, 5' wieder in den Wurststrang eingreifen. In Fig. 8 sind gestrichelt unterschiedliche Positionen der Abteilelemente gezeigt.

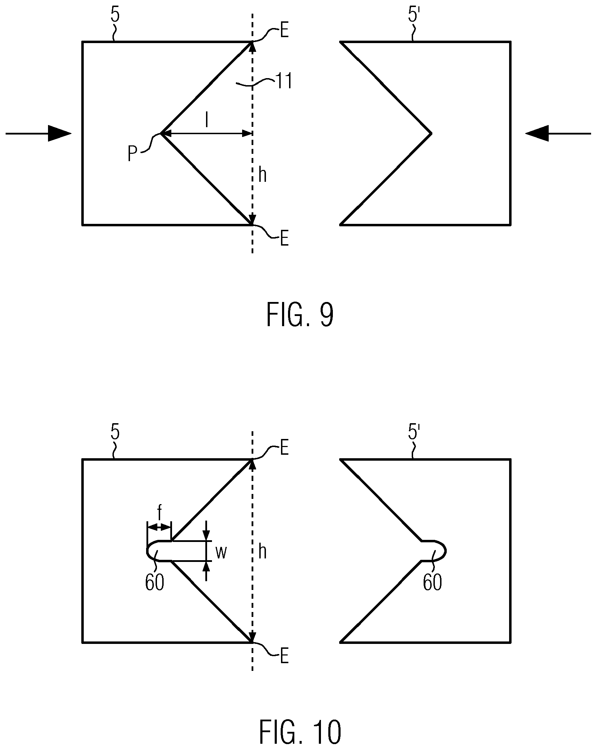

Fig. 9 zeigt grob schematisch Verdrängerelemente 5, 5', die aufeinander zu bewegbar sind, wie durch die Pfeile dargestellt ist. Dadurch, dass das Ausmaß der Bewegung der Verdrängerelemente 5 quer zur Transportrichtung T frei einstellbar ist, ist es möglich, nur eine Größe von Verdrängerelementen für alle Kaliber zu verwenden. Die Verdrängerelemente weisen beispielsweise eine Aussparung 11 auf, die von vorderen Enden E des Verdrängerelements 5 zu einem Punkt P zu laufen. Die Aussparung kann beispielsweise dreieckförmig, bogenförmig etc. sein. Der Abstand I von einem hintersten Punkt P zu einer Gerade zwischen den Eckpunkten E liegt in einem Bereich <=100 mm, vorzugsweise 5 - 100 mm bzw. 5 bis 40 mm. Der Abstand h zwischen den äußersten Eckpunkten E des Verdrängerelements liegt in einem Bereich von 10 bis 100 mm, vorzugsweise 10 bis 50 mm.

Werden kleine Wurstkaliber abgeteilt, müssen die Verdrängerelemente weiter aufeinander zu bewegt werden, bis sie in Eingriff mit dem Wurstrang kommen, als bei Würsten mit größerem Kaliber. Da die Bewegungsbahn 9 frei einstellbar ist, werden hier keine Wechselteile, d.h. unterschiedliche Verdrängerelemente, benötigt.

Nachfolgend wird ein mögliches Verfahren anhand der Fig. 1 bis 9 erläutert.

Wie zuvor beschrieben, werden vor Herstellungsbeginn in die Eingabeeinrichtung 19 neben weiteren, für diese Anmeldung jedoch nicht erheblichen Parametern, bestimmte Parameter eingegeben. Insbesondere kann die Länge der Wurstportion, das Kaliber der Wurstportion und die Wursthüllensorte eingegeben werden. Weiter kann auch die Transportgeschwindigkeit des transportierten Wurststrangs in Transportrichtung T eingegeben werden oder die Geschwindigkeit wird über andere Werte von der Steuerung der Füllmaschine ermittelt und für die Ansteuerung der Vorrichtung verwendet.

In Abhängigkeit dieser Parameter berechnet z.B. die Steuerung 15 anhand eines Programms eine bestimmte Bahn oder ruft eine vorab abgespeicherte Bahn ab.

Anhand dieser Parameter werden also die Abteilelemente entlang einer passenden Bahn mit entsprechenden Geschwindigkeiten bewegt. Die ideale Form der Bahn mit den entsprechenden Geschwindigkeiten wurde experimentell bestimmt und / oder berechnet. Beispielsweise wird die Strecke s oder der Abstand von Punkt P zu Punkt R, d.h. die Strecke wo das jeweilige Abteilelement eine Bewegungskomponente in Transportrichtung aufweist, in Abhängigkeit der Länge der Wurstportion festgelegt. Das Ausmaß der Bewegung quer zur Transportrichtung T ist beispielsweise kaliberabhängig. Die Geschwindigkeit, wie schnell die Verdrängerelemente 5 in den Wurststrang eingeführt werden, hängt von der Wursthüllensorte ab. Bei empfindlichen Wursthüllen erfolgt ein langsames, schonendes Einschnüren. Die gesamte Bahn kann also Produkt- oder auch Darmabhängig eingestellt werden. Bei empfindlichen Naturdärmen ist es auch vorteilhaft, wenn die Strecke, in der die Würste geführt werden - also in Kontakt mit den Abteilelementen sind , im Vergleich zu unempfindlichen Wursthüllen länger ist. Die Mitfahrgeschwindigkeit, d.h. die Geschwindigkeit in Transportrichtung T, der Abteilelemente, wenn sie die Wursthülle berühren oder in Eingriff mit dem Wurststrang 7 sind, kann der Geschwindigkeit des Wurststrangs 7 in Transportrichtung T entsprechen. Dies ist sehr produktschonend. Es ist jedoch auch möglich, die Abteilelemente langsamer als den Wurstrang zu bewegen, wobei dann der gefüllte Wurststrang aufgestaut werden kann oder aber schneller zum Dehnen der Abteilstelle. Optional können die Verdrängerelemente 5 bei ihrer Rückwärtsbewegung vom Wurststrang hinaus nur so weit herausfahren, dass z.B. noch Führungsaufgaben übernommen werden können. Diese Führungsaufgaben können auch derart gestaltet sein, dass z.B. bei langen Portionen die Verdrängerelemente nur bis zum Wurstkaliber oder geringfügig größer geschlossen werden und damit die Wurstportion beim Mitfahren nur zentrisch getragen werden. Durch die flexible Bewegung der Abteilelemente quer zur Wurst sind unterschiedliche Restquerschnitte (Eintauchtiefen) einstellbar.

Wenn die Verdrängerelemente 5, 5' ausreichend tief in den Wurststrang 7 eingeführt wurden, wie beispielsweise in Fig. 2 gezeigt ist, kann in dieser Position oder in einer Position entlang der Strecke s das Abdrehgetriebe über den Motor betätigt werden, wobei der Wurststrang 7 um seine Mittelachse M gedreht wird und dann an den Verdrängerelementen 5 eine Abteilstelle einspringt. Bis sich die Verdrängerelemente aus dem Wurststrang hinausbewegen, wird der Wurststrang noch von den Verdrängerelementen geführt, wonach die Wurstportionen dann einer weiteren Fördereinrichtung 14 zum Weitertransport übergeben werden.

Bei der vorliegenden Erfindung kann eine Abteilstelle erzeugt werden, wobei der Einschnürvorgang (Bewegung zwischen den Punkten P und O) und die Mitfahrbewegung in Transportrichtung (zwischen Punkten P und R) sowie auch der Auskoppelvorgang (z.B. zwischen Punkten K und R) voneinander unabhängig gesteuert werden können, so dass der Prozess optimal an ein bestimmtes Produkt angepasst werden kann.

Die beiden Abteilelemente 3, 3' können auch unabhängig voneinander angetrieben werden. Das eröffnet die Möglichkeit, nach dem Eingriff der Verdrängerelemente 5, 5' diese unterschiedlich schnell in Transportrichtung T zu bewegen und durch diese Relativbewegung die Verdrängerelemente 5, 5' auf Abstand zu bringen und damit einen "Zopf" zu bilden. Damit ist die gezeigte Vorrichtung auch für Clipmaschinen zu nutzen, wobei in den Zopf zwischen den Verdrängerelementen der Clip gesetzt wird. Vorteilhafterweise werden dann Verdrängerelemente verwendet, die z.B. in der Mitte des Prismas noch eine U-förmige Aussparung 60 aufweisen, damit der Darm nicht herausrutscht, wie in Fig. 10 gezeigt ist.

Das heißt, dass die Verdrängerelemente, wie in Fig. 9 gezeigt ist, eine Aussparung 11 aufweisen, deren Höhe h von den Vorderenden E auf bis auf einen Wert w abnimmt, wobei w in einem Bereich von 2 bis 8 mm liegt und sich hier die Aussparung 60 an die Aussparung 11 anschließt. Die Länge f liegt vorzugsweise in einem Bereich von 1 bis 10 mm. Diese Aussparung kann auch z.B. einen C-förmigen oder einen V-förmigen Schnitt aufweisen derart, dass der Darm durch die Aussparung 60 gehalten werden kann.

## Patentansprüche

1. Verfahren zum Abteilen eines von einer Füllmaschine (100) erzeugten Wurststrangs (7) in einzelne Wurstportionen mit folgenden Schritten:
- Transportieren des Wurststrangs (7) in Transportrichtung (T),
- Abteilen des gefüllten Wurststrangs (7) durch gegenüberiiegende, in den Wurststrang (7) eingreifende Abteilelemente (3, 3') wobei
- die Bewegung der Abteilelemente (3, 3') jeweils entlang einer frei einstellbaren Bahn (9) gesteuert wird,
wobei die Abteilelemente (3, 3') auf ihrer Bahn zumindest folgende Schritte durchlaufen:
a) Einschnürschritt, bei dem die Abteilelemente (3, 3') von einem Startpunkt (P) aus aufeinander zu bewegt werden,
b) Mitfahrschritt, bei dem die Abteilelemente (3, 3') jeweils in Transportrichtung (T) mitbewegt werden,
c) Auskoppelschritt, bei dem die Abteilelemente (3, 3') jeweils aus dem Wurststrang (7) herausbewegt werden,
d) Rückführschritt, in dem die Abteilelemente (3, 3') zum Startpunkt (P) rückgeführt werden,
wobei die Länge des Mitfahrschritts einstellbar ist, **dadurch gekennzeichnet, dass** die Bahnkoordinaten (X, Y) der Bahn (9) sowie die Geschwindigkeit der jeweiligen Abteilelemente (3, 3') auf verschiedenen Bahnabschnitten in Abhängigkeit folgender Parameter eingestellt werden:
- Länge der Wurstportion und
- Kaliber der Wurstportion und
- Wursthüllensorte.

2. Verfahren nach Anspruch 1, **dadurch gekennzeichnet, dass** die Bahnkoordinaten (X, Y) der Bahn (9) sowie die Geschwindigkeit der jeweiligen Abteilelemente (3, 3') auf den verschiedenen Bahnabschnitten in Abhängigkeit der Transportgeschwindigkeit des transportierten Wurststrangs in Transportrichtung (T) eingestellt werden.

3. Verfahren nach Anspruch 1 oder 2, **dadurch gekennzeichnet, dass** eine Bewegung des jeweiligen Abteilelements (3,3') in eine Richtung senkrecht zur Transportrichtung T (Y) unabhängig von einer Bewegung in eine Richtung in Transportrichtung (X) gesteuert wird, und insbesondere dass die Geschwindigkeit der jeweiligen Abteilelemente (3,3') in einer Richtung senkrecht zur Transportrichtung unabhängig von der Geschwindigkeit der Abteilelemente (3, 3') in Transportrichtung (T) gesteuert wird.

4. Verfahren nach mindestens einem der Ansprüche 1 bis 3, **dadurch gekennzeichnet, dass** die Abteilelemente (3, 3') jeweils auf ihrer Bahn (9), während sie den Wurststrang (7) berühren oder in den Wurststrang (7) eingreifen, eine vorbestimmte Strecke (s) auf einem Bahnabschnitt bewegt werden, der parallel zur Mittelachse (M) des Wurststrangs (7) verläuft und die vorbestimmte Strecke (s) insbesondere in einem Bereich von 0 bis 100 mm liegt.

5. Verfahren nach mindestens einem der Ansprüche 1 bis 4, **dadurch gekennzeichnet, dass** für unterschiedliche Wurstkaliber die gleichen Abteilelemente (3, 3') verwendet werden.

6. Verfahren nach mindestens einem der Ansprüche 1 bis 5, **dadurch gekennzeichnet, dass** die Geschwindigkeit des jeweiligen Abteilelements (3, 3') in einer Richtung senkrecht zur Transportrichtung (X) des Wurststrangs (7), wenn sich das jeweilige Abteilelement (3, 3') von der Außenkontur des Wurststrangs (7) in den Wurststrang (7) hinein bewegt, sich von der Geschwindigkeit entgegen dieser Richtung senkrecht zur Transportrichtung des Wurststrangs (7), wenn sich das jeweilige Abteilelement (3, 3') aus dem Wurststrang (7) heraus bewegt, unterscheidet.

7. Vorrichtung zum Durchführen des Verfahrens nach mindestens einem der Ansprüche 1 bis 6 mit zwei Abteilelementen (3, 3'), die auf gegenüberliegenden Seiten des in Transportrichtung (T) geförderten Wurststrangs (7) liegen, umfassend einen Bewegungsmechanismus (12, 12'), der so von einer Steuerung (15) angesteuert werden kann, dass eine gewünschte Bahn (9), auf der die Abteilelemente (3, 3') bewegt werden, erzielt werden kann, die frei einstellbar ist, wobei die Bahnkoordinaten (X, Y) der Bahn (9) sowie die Geschwindigkeit der jeweiligen Abteilelemente (3, 3') auf verschiedenen Bahnabschnitten in Abhängigkeit folgender Parameter eingestellt werden:
- Länge der Wurstportion und
- Kaliber der Wurstportion und
- Wursthüllensorte.
wobei die Vorrichtung derart ausgebildet ist, dass die Abteilelemente (3, 3') auf ihrer Bahn zumindest folgende Schritte durchlaufen **können:**
a) Einschnürschritt, bei dem die Abteilelemente (3, 3') von einem Startpunkt (P) aus aufeinander zu bewegt werden können,
b) Mitfahrschritt, bei dem die Abteilelemente (3, 3') jeweils in Transportrichtung (T) mitbewegt werden können,
c) Auskoppelschritt, bei dem die Abteilelemente (3, 3') jeweils aus dem Wurststrang (7) herausbewegt werden können,
d) Rückführschritt, in dem die Abteilelemente (3, 3') zum Startpunkt (P) rückgeführt werden können,
wobei die Länge des Mitfahrschritts einstellbar ist.

8. Vorrichtung (100) nach Anspruch 7, **dadurch gekennzeichnet, dass** die Vorrichtung zwei unabhängig voneinander ansteuerbare
Antriebe pro Abteilelement (3, 3') aufweist und jeweils einen Bewegungsmechanismus (12,12'), der mit den beiden Antrieben (10a,b, 10a',b') und dem jeweiligen Abteilelement (3) verbunden ist, so dass die jeweiligen Abteilelemente (3, 3') entlang der frei einstellbaren Bahn (9) bewegbar sind.

9. Vorrichtung (100) nach Anspruch 7 oder 8 **dadurch gekennzeichnet, dass** der jeweiligeBewegungsmechanismus (12) zwei Antriebsglieder (1a, 1b, 1a', 1b') umfasst, die jeweils mit einem der beiden Antriebe (10a, 10b, 10a', 10b') verbunden sind, sowie zwei Kopplungsglieder (2a, 2b, 2a', 2b'), die gelenkig mit den Antriebsgliedern (1a; 1b, 1a', 1b') verbunden sind, wobei auch die Kopplungsglieder (2a, 2b, 2a', 2b') miteinander gelenkig verbunden sind und das entsprechende Abteilelement (3, 3') an mindestens einem Kopplungsglied (2a, 2b, 2a', 2b') angeordnet ist.

10. Vorrichtung (100) nach mindestens Anspruch 8, **dadurch gekennzeichnet, dass** der Bewegungsmechanismus (12) eine Parallelogrammführung (13) umfasst, derart, dass das jeweilige Abteilelement (3, 3') bei der Bewegung auf der Bahn eine gleichbleibende Ausrichtung zum Wurststrang (7) beibehält, und insbesondere, dass das am Kopplungsglied (2a, 2a') befestigte Abteilelement (3, 3') bei Bewegung entlang einer Bahn (9) des Kopplungsglieds (2a; 2a') eine gleichbleibende Ausrichtung zum Wurststrang (7) beibehält.

11. Vorrichtung (100) nach mindestens einem der Ansprüche 7 bis 10, **dadurch gekennzeichnet, dass** die Antriebe (10a, 10b, 10a', 10b') bei der Bewegung der Abteilelemente (3) auf ihrer Bahn eine Hin- und Herdrehbewegung ausführen.

12. Vorrichtung (100) nach mindestens einem der Ansprüche 7 bis 11, **dadurch gekennzeichnet, dass** die Vorrichtung eine Steuerung umfasst, in der die Bahnkoordinaten (X, Y) in Winkelpositionen der Antriebe (10a, 10b, 10a', 10b') umgerechnet werden.

13. Vorrichtung (100) nach mindestens einem der vorherigen Ansprüche 7 bis 12, **dadurch gekennzeichnet, dass** die gegenüberliegenden Abteilelemente (3, 3') jeweils zwei Antriebe (10a, 10b, 10a', 10b') aufweisen, wobei mindestens ein Antrieb (10a, 10b, 10a', 10b') eines Abteilelements (3, 3') mit jeweils einem Antrieb des anderen Abteilelements (3, 3') gekoppelt ist.

14. Füllmaschine (101) mit einer Vorrichtung nach mindestens einem der Ansprüche 7 bis 13, **dadurch gekennzeichnet, dass** die Füllmaschine eine Eingabeeinrichtung (19) aufweist, in der folgende Parameter eingegeben werden können:
Länge und Kaliber der Wurstportion und die Wursthüllensorte eingegeben werden kann.

15. Vorrichtung nach mindestens einem der Ansprüche 7 bis 13, **dadurch gekennzeichnet, dass** die Abteilelemente (3, 3') unabhängig voneinander antreibbar sind und vorteilhafterweise Verdrängerelemente (5, 5') eine Aussparung (11) aufweisen, deren Höhe (h) im Längsschnitt von der Mittelachse auf einen Wert (w) abnimmt, wobei sich an die Aussparung (11) eine zweite kleinere Aussparung (60) anschließt, die derart ausgebildet ist, dass nach dem Eingreifen der Verdrängerelemente in den Wurststrang (7) ein Wurstzopf in der Aussparung (60) gehalten werden kann.

16. Verfahren nach **Anspruch 1, dadurch gekennzeichnet, dass** die Abteilelemente (3, 3') bei dem Mitfahrschritt (b) unterschiedlich schnell in Transportrichtung (T) bewegt werden.

## Claims

1. A method for portioning a sausage string (7) generated by a filling machine (100) into single sausage portions, having the following steps:
- Transporting the sausage string (7) in the direction of transport (T),
- Portioning the filled sausage string (7) by means of opposing portioning elements (3, 3') that engage in the sausage string (7), wherein
- the movement of the portioning elements (3, 3') is controlled in each case along a freely adjustable track (9) wherein
the portioning elements (3, 3') pass at least through the following steps on their track:
a) Constriction step, in which the portioning elements (3, 3') are moved toward one another from a starting point (P),
b) Conveyance step, in which the portioning elements (3, 3') are each moved repectively in the direction of transport (T),
c) Decoupling step, in which the portioning elements (3, 3') are each retracted from the sausage string (7),
d) Return step, in which the portioning elements (3, 3') are returned to the starting point (P),
wherein the length of the conveyance step can be adjusted,
**characterized in that**,
the track coordinates (X, Y) of the track (9) as well as the speed of the respective portioning elements (3, 3') are adjusted at different track sections in relation to the following parameters:
- length of the sausage portion and
- caliber of the sausage portion and
- type of sausage casing.

2. The method according to Claim 1, **characterized in that** the track coordinates (X, Y) of the track (9) as well as the speed of the respective portioning elements (3, 3') are adjusted at different track sections in relation to the transport speed of the transported sausage portion in the direction of transport (T).

3. The method according to Claim 1 or 2, **characterized in that** a movement of the respective portioning element (3, 3') in a direction perpendicular to the direction of transport T (Y) is controlled independently of a movement in a direction in the direction of transport (X), and in particular, **in that** the speed of the respective portioning elements (3, 3') in a direction perpendicular to the direction of transport is controlled independently of the speed of the portioning elements (3, 3') in the direction of transport (T).

4. The method according to at least one of the Claims 1 - 3, **characterized in that** the portioning elements (3, 3') are each moved on their track (9) for a predetermined distance (s) on a track section, while they are touching the sausage string (7) or engaged in the sausage string (7), which runs parallel to the central axis (M) of the sausage string (7), and the predetermined distance (s) lies, in particular, in a range of 0 - 100 mm.

5. The method according to at least one of the Claims 1 - 4, **characterized in that** the same portioning elements (3, 3') are used for different sausage calibers.

6. The method according to at least one of the Claims 1 - 5, **characterized in that** the speed of the respective portioning elements (3, 3') in a direction perpendicular to the direction of transport (X) for the sausage string (7), when the respective portioning element (3, 3') moves from the outer surface of the sausage string (7) into the sausage string (7), differs from the speed counter to this direction, perpendicular to the direction of transport for the sausage string (7), when the respective portioning element (3, 3') is retracted from the sausage string (7).

7. A device for executing the method according to at least one of the Claims 1 - 6, having two portioning elements (3, 3') which lie on opposite sides of the sausage string (7) comprising a movement mechanism (12, 12'), which can be controlled by a controller (15) such that a desired track (9), on which the portioning elements (3, 3') are moved, can be achieved, which is freely adjustable, wherein the track coordinates (X, Y) of the track (9) as well as the speed of the respective portioning elements (3, 3') are adjusted at different track sections in relation to the following parameters:
- length of the sausage portion and
- caliber of the sausage portion and
- type of sausage casing,
- wherein the device is formed such that
the portioning elements (3,3') can pass at least through the following steps on their track:
a) Constriction step, in which the portioning elements (3, 3') are moved toward one another from a starting point (P),
b) Conveyance step, in which the portioning elements (3, 3') are each moved repectively in the direction of transport (T),
c) Decoupling step, in which the portioning elements (3, 3') are each retracted from the sausage string (7),
d) Return step, in which the portioning elements (3, 3') are returned to the starting point (P), wherein the length of the conveyance step can be adjusted.

8. The device (100) according to Claim 7, **characterized in that** the device has two drives for each portioning element (3, 3'), which can be activated independently of one another, and each have a movement mechanism (12, 12'), which is connected to the two drives (10a, b, 10a', b') and the respective portioning element (3), such that the respective portioning elements (3, 3') can be moved along the freely adjustable track (9).

9. The device (100) according to at least one of the Claims 7 or 8, **characterized in that** the respective movement mechanism (12) comprises two drive links (1a, 1b, 1a', 1b'), each of which is connected to one of the two drives (10a, 10b, 10a', 10b'), and two coupling links (2a, 2b, 2a', 2b'), which are connected in an articulated manner to the drive links (1a, 1b, 1a', 1b'), wherein the coupling links (2a, 2b, 2a', 2b') are also connected in an articulated manner to one another, and the corresponding portioning element (3, 3') is disposed on at least one coupling link (2a, 2b, 2a', 2b').

10. The device (100) according to at least Claim 8, **characterized in that** the movement mechanism (12) comprises a parallelogram guide (13), such that the respective portioning element (3, 3') maintains a consistent orientation to the sausage string (7) during the movement on the track, and in particular **in that** the portioning element (3, 3') attached to the coupling link (2a, 2a') maintains a consistent orientation to the sausage string (7) during the movement along a track (9) of the coupling link (2a; 2a').

11. The device (100) according to at least one of the Claims 7 - 10, **characterized in that** the drives (10a, 10b, 10a', 10b') execute a back and forth rotational movement during the movement of the portioning elements (3) on their track.

12. The device (100) according to at least one of the Claims 7- 11, **characterized in that** the device comprises a control unit in which the track coordinates (X, Y) are converted to angular positions of the drives (10a, 10b, 10a', 10b').

13. The device (100) according to at least one of the preceding Claims 7 - 12, **characterized in that** the opposing portioning elements (3, 3') each have two drives (10a, 10b, 10a', 10b'), wherein at least one drive (10a, 10b, 10a', 10b') of a portioning element (3, 3') is coupled to a respective drive of the other portioning element (3, 3').

14. A filling machine (101) having a device according to at least one of the Claims 7 - 13, **characterized in that** the filling machine has an input means (19), in which the following parameters can be entered: length and caliber of the sausage portion, wherein advantageously, the sausage casing type can additionally be entered.

15. A device according to at least one of the Claims 7 - 13, **characterized in that** the portioning elements (3, 3') can be driven independently of one another, and advantageously, the displacement elements (5, 5') have a recess (11), the height (h) of which decreases in the longitudinal section from the central axis, to a value (w), wherein a second recess (60) adjoins the recess (11), which is designed such that after the engagement of the displacement elements in the sausage string (7), a sausage pigtail can be retained in the recess (60).

16. A method, in particular according to Claim 1, **characterized in that** the portioning elements (3, 3') move at different speeds in the direction of transport (T) during the conveyance step (b).

## Revendications

1. Procédé de séparation d'un chapelet de saucisses (7) produit par une machine de remplissage (100) en portions de saucisses individuelles, comprenant les étapes suivantes :
- transport du chapelet de saucisses (7) dans la direction de transport (T),
- séparation du chapelet de saucisses rempli (7) par des éléments de séparation opposés (3, 3'), s'engageant dans le chapelet de saucisses (7),
- le déplacement des éléments de séparation (3, 3') étant à chaque fois commandé le long d'une voie pouvant être ajustée librement (9),
les éléments de séparation (3, 3') parcourant sur leur voie au moins les étapes suivantes :
a) étape de serrage dans laquelle les éléments de séparation (3, 3') sont déplacés les uns vers les autres à partir d'un point de départ (P),
b) étape d'entraînement dans laquelle les éléments de séparation (3, 3') sont à chaque fois déplacés ensemble dans la direction de transport (T),
c) étape de désaccouplement dans laquelle les éléments de séparation (3, 3') sont à chaque fois déplacés hors du chapelet de saucisses (7),
d) étape de retour dans laquelle les éléments de séparation (3, 3') sont ramenés au point de départ (P),
la longueur de l'étape d'entraînement pouvant être ajustée, **caractérisé en ce que** les coordonnées de voie (X, Y) de la voie (9) ainsi que la vitesse des éléments de séparation respectifs (3, 3') sont ajustées à différentes portions de voies en fonction des paramètres suivants :
- longueur de la portion de saucisses et
- calibrage de la portion de saucisses et
- types de boyaux pour saucisses.

2. Procédé selon la revendication 1, **caractérisé en ce que** les coordonnées de voie (X, Y) de la voie (9) ainsi que la vitesse des éléments de séparation respectifs (3, 3') sont ajustées aux différentes portions de voie en fonction de la vitesse de transport du chapelet de saucisses transporté dans la direction de transport (T).

3. Procédé selon la revendication 1 ou 2, **caractérisé en ce qu'**un déplacement de l'élément de séparation respectif (3, 3') dans une direction (Y) perpendiculaire à la direction de transport (T) est commandé indépendamment d'un déplacement dans une direction dans la direction de transport (X), et notamment **en ce que** la vitesse des éléments de séparation respectifs (3, 3') dans une direction perpendiculaire à la direction de transport est commandée indépendamment de la vitesse des éléments de séparation (3, 3') dans la direction de transport (T).

4. Procédé selon au moins l'une quelconque des revendications 1 à 3, **caractérisé en ce que** les éléments de séparation (3, 3') sont à chaque fois déplacés sur leur voie (9), pendant qu'ils viennent en contact avec ou s'engagent dans le chapelet de saucisses (7), sur une distance prédéterminée (s) sur une portion de voie, qui s'étend parallèlement à l'axe médian (M) du chapelet de saucisses (7) et la distance prédéterminée (s) est notamment comprise dans une plage de 0 à 100 mm.

5. Procédé selon au moins l'une quelconque des revendications 1 à 4, **caractérisé en ce que** les mêmes éléments de séparation (3, 3') sont utilisés pour différents calibres de saucisses.

6. Procédé selon au moins l'une quelconque des revendications 1 à 5, **caractérisé en ce que** la vitesse de l'élément de séparation respectif (3, 3') dans une direction perpendiculaire à la direction de transport (X) du chapelet de saucisses (7), lorsque l'élément de séparation respectif (3, 3') se déplace depuis le contour extérieur du chapelet de saucisses (7) vers l'intérieur du chapelet de saucisses (7), est différente de la vitesse dans le sens opposé à cette direction perpendiculairement à la direction de transport du chapelet de saucisses (7), lorsque l'élément de séparation respectif (3, 3') se déplace hors du chapelet de saucisses (7).

7. Dispositif pour mettre en oeuvre le procédé selon au moins l'une quelconque des revendications 1 à 6, comprenant deux éléments de séparation (3, 3') qui sont situés sur des côtés opposés du chapelet de saucisses (7) transporté dans la direction de transport (T), comprenant un mécanisme de déplacement (12, 12') qui peut être commandé par une commande (15) de telle sorte qu'une voie souhaitée (9) sur laquelle sont déplacés les éléments de séparation (3, 3') puisse être obtenue, laquelle peut être ajustée librement, les coordonnées de voie (X, Y) de la voie (9) ainsi que la vitesse des éléments de séparation respectifs (3, 3') pouvant être ajustées à différentes sections de voie en fonction des paramètres suivants :
- longueur de la portion de saucisse et
- calibre de la portion de saucisse et
- types de boyaux pour saucisses,
le dispositif étant réalisé de telle sorte que les éléments de séparation (3, 3') puissent parcourir sur leur voie au moins les étapes suivantes :
a) étape de serrage dans laquelle les éléments de séparation (3, 3') peuvent être déplacés les uns vers les autres à partir d'un point de départ (P),
b) étape d'entraînement dans laquelle les éléments de séparation (3, 3') peuvent à chaque fois être déplacés ensemble dans la direction de transport (T),
c) étape de désaccouplement dans laquelle les éléments de séparation (3, 3') peuvent à chaque fois être déplacés hors du chapelet de saucisses (7),
d) étape de retour dans laquelle les éléments de séparation (3, 3') peuvent être ramenés au point de départ (P),
la longueur de l'étape d'entraînement pouvant être ajustée.

8. Dispositif (100) selon la revendication 7, **caractérisé en ce que** le dispositif présente deux entraînements par élément de séparation (3, 3'), pouvant être commandés indépendamment l'un de l'autre, et à chaque fois un mécanisme de déplacement (12, 12'), qui est raccordé aux deux entraînements (10a,b, 10a',b') et à l'élément de séparation respectif (3), de telle sorte que les éléments de séparation (3, 3') puissent être déplacés le long de la voie (9) librement ajustable.

9. Dispositif (100) selon la revendication 7 ou 8, **caractérisé en ce que** le mécanisme de déplacement respectif (12) comprend deux organes d'entraînement (1a, 1b, 1a', 1b') qui sont à chaque fois raccordés à l'un des deux entraînements (10a, 10b, 10a', 10b'), ainsi que deux organes d'accouplement (2a, 2b, 2a', 2b'), qui sont raccordés de manière articulée aux organes d'entraînement (1a ; 1b, 1a', 1b'), les organes d'accouplement (2a, 2b, 2a', 2b') étant raccordés les uns aux autres de manière articulée et l'élément de séparation correspondant (3, 3') étant disposé au niveau d'au moins un organe d'accouplement (2a, 2b, 2a', 2b').

10. Dispositif (100) selon au moins la revendication 8, **caractérisé en ce que** le mécanisme de déplacement (12) comprend un guide à parallélogramme (13), de telle sorte que l'élément de séparation respectif (3, 3'), lors de son déplacement sur la voie, conserve une orientation uniforme par rapport au chapelet de saucisses (7), et notamment **en ce que** l'élément de séparation (3, 3') fixé à l'organe d'accouplement (2a, 2a'), lors de son déplacement le long d'une voie (9) de l'organe d'accouplement (2a ; 2a'), conserve une orientation uniforme par rapport au chapelet de saucisses (7).

11. Dispositif (100) selon au moins l'une quelconque des revendications 7 à 10, **caractérisé en ce que** les entraînements (10a, 10b, 10a', 10b'), lors du déplacement des éléments de séparation (3) sur leur voie, effectuent un mouvement rotatif de va et vient.

12. Dispositif (100) selon au moins l'une quelconque des revendications 7 à 11, **caractérisé en ce que** le dispositif comprend une commande dans laquelle sont calculées les coordonnées de voie (X, Y) dans des positions angulaires des entraînements (10a, 10b, 10a', 10b').

13. Dispositif (100) selon au moins l'une quelconque des revendications précédentes 7 à 12, **caractérisé en ce que** les éléments de séparation opposés (3, 3') présentent à chaque fois deux entraînements (10a, 10b, 10a', 10b'), au moins un entraînement (10a, 10b, 10a', 10b') d'un élément de séparation (3, 3') étant accouplé à chaque fois à un entraînement de l'autre élément de séparation (3, 3').

14. Machine de remplissage (101) comprenant un dispositif selon au moins l'une quelconque des revendications 7 à 13, **caractérisée en ce que** la machine de remplissage présente un dispositif d'entrée (19) dans lequel peuvent être entrés les paramètres suivants :
longueur et calibre de la portion de saucisse et types de boyaux pour saucisses.

15. Dispositif selon au moins l'une quelconque des revendications 7 à 13, **caractérisé en ce que** les éléments de séparation (3, 3') peuvent être entraînés indépendamment les uns des autres et avantageusement des éléments de transport (5, 5') présentent un évidement (11) dont la hauteur (h) en couple longitudinale diminue depuis l'axe médian à une valeur (w), un deuxième évidement plus petit (60) se raccordant à l'évidement (11), lequel est réalisé de telle sorte qu'après l'engagement des éléments de transport dans le chapelet de saucisses (7), une tresse de saucisses puisse être maintenue dans l'évidement (60).

16. Procédé selon la revendication 1, **caractérisé en ce que** les éléments de séparation (3, 3') sont déplacés lors de l'étape d'entraînement (b) à des vitesses différentes dans la direction de transport (T).
